# EUROPÄISCHE PATENTSCHRIFT

(11) **EP 2 480 411 B1**
(45) Veröffentlichungstag und Bekanntmachung des Hinweises auf die Patenterteilung: **11.11.2015**
(21) Anmeldenummer: 10760603.0
(22) Anmeldetag: 20.09.2010
(51) Int. Cl.: C09J 7/02, B32B 27/08, B32B 37/26, C08K 5/00, B32B 7/06, B32B 27/28, C09D 143/04, C08L 31/04

(54) **ÜBERWIEGEND BIOLOGISCH ABBAUBARE TRENNFOLIE**
PREDOMINANTLY BIODEGRADABLE SEPARATING FILM
FILM DE SÉPARATION ESSENTIELLEMENT BIODÉGRADABLE

(30) Priorität: 21.09.2009 DE 102009042088
(43) Veröffentlichungstag der Anmeldung: 01.08.2012
(73) Patentinhaber: Infiana Germany GmbH & Co. KG, 91301 Forchheim (DE)
(72) Erfinder: SCHUHMANN, Michael, 90613 Grosshabersdorf (DE); STARK, Kurt, 91284 Neuhaus (DE); SITZMANN, Stefan, 91356 Kirchehrenbach (DE)
(74) Vertreter: Kutzenberger, Helga
(86) Internationale Anmeldenummer: PCT/EP2010/005750
(87) Internationale Veröffentlichungsnummer: WO 2011/032727

(56) Entgegenhaltungen:
- EP-A1- 0 637 618
- EP-A1- 1 734 093
- EP-A2- 0 536 766
- DE-A1- 1 696 182
- US-A- 5 425 991
- US-A- 5 932 352
- DATABASE WPI Week 200831 Thomson Scientific, London, GB; AN 2008-E57176 XP002617073, & JP 2008 056734 A (KIMOTO KK) 13. März 2008 (2008-03-13)
- DATABASE WPI Week 200882 Thomson Scientific, London, GB; AN 2008-O01968 & CN 101 134 875 A (CAS CHANGCHUN APPLIED CHEM INST) 5 March 2008 (2008-03-05)

## Beschreibung

Die vorliegende Erfindung betrifft eine zumindest zweischichtige, zu mehr als 50% biologisch abbaubare, entfernbare Schutzfolie oder Abdeckfolie umfassend wenigstens eine Trägerschicht (a) basierend auf wenigstens einem biologisch abbaubaren Polymeren und wenigstens eine Releaseschicht (b) basierend auf wenigstens einem ausgehärteten Polysiloxan, dessen Aushärtung zumindest teilweise auf wenigstens einem vernetzenden monomeren oder oligomeren Additiv beruht, welches auch die Haftungsvermittlung zwischen der Trägerschicht (a) und der Releaseschicht (b) bewirkt, keine Siloxan-Gruppen aber wenigstens zwei funktionelle Gruppen aufweist, von denen wenigstens eine eine zumindest eine Kohlenstoff-Doppelbindung aufweisende funktionelle Gruppe ist, wobei keine Haftvermittlerschicht zwischen der Trägerschicht (a) und der Releaseschicht (b) vorliegt, sowie deren Herstellung und Verwendung.

Trennfolien mit Trägerschichten aus thermoplastischen Kunststoffen wie Polyolefinen, Polyestern oder Polyamiden, die eine Releaseschicht auf Basis eines Polysiloxans aufweisen, werden vielfach als Schutzfolien von Klebebändern oder Selbstklebeetiketten eingesetzt, um z.B. ein Verkleben dieser einseitig oder beidseitig klebenden Produkte bei der Lagerung zu verhindern. Derartige Trennfolien zeichnen sich durch eine gute Trennwirkung gegen Klebstoffe wie z.B. druckempfindliche Klebstoffe oder andere klebefähige Materialien sowie durch eine gute Haftung zwischen der Releaseschicht und der Trägerschicht aus. Durch die Haftung der Releaseschicht auf der Trägerschicht wird ein unkontrolliertes, zumindest partielles Ablösen (Rub-Off) der Releaseschicht von der Trägerschicht vor der eigentlichen Anwendung verhindert.

Solche Trennfolien besitzen jedoch den Nachteil, dass ihre Trägerschichten nicht biologisch abbaubar sind.

Es ist jedoch sowohl aus ökologischer als auch aus ökonomischer Sicht anzustreben, dass zumindest die Trägerschichten solcher Trennfolien aus biologisch abbaubaren

Materialien hergestellt werden, um nach kontrolliertem Entfernen der Releaseschicht eine endgültige Entsorgung dieser Materialen z.B. durch Kompostierung sicher zu stellen.

Es besteht daher ein Bedarf an überwiegend biologisch abbaubaren Trennfolien, die die vorstehend genannten Anforderungen an herkömmliche Trennfolien aus nicht biologisch abbaubaren Materialen hinsichtlich ihrer Trennwirkung erfüllen und zudem auch eine sehr gute Haftung zwischen Träger- und Releaseschicht aufweisen. Aufgabe der vorliegenden Erfindung war es daher, eine entfernbare Schutzfolie oder Abdeckfolie zur Verfügung zu stellen, die überwiegend, d.h. zu mehr als 50%, biologisch abbaubar ist und die sich durch eine sehr gute Trennwirkung gegen Klebstoffe und klebefähige Materialien bei einer ausgezeichneten Haftung zwischen der Releaseschicht und der Trägerschicht ohne Haftvermittlerschicht auszeichnet.

Diese Aufgabe wird durch die Bereitstellung einer zumindest zweischichtigen überwiegend biologisch abbaubaren, entfernbaren Schutzfolie oder Abdeckfolie umfassend wenigstens eine Trägerschicht (a) basierend auf wenigstens einem biologisch abbaubaren Polymeren und wenigstens eine Releaseschicht (b) basierend auf wenigstens einem ausgehärteten Polysiloxan, dessen Aushärtung zumindest teilweise auf wenigstens einem vernetzenden monomeren oder oligomeren Additiv beruht, wobei auch die Haftungsvermittlung zwischen der Trägerschicht (a) und der Releaseschicht (b) bewirkt wird, d.h. keine separate Haftvermittlerschicht zwischen der Trägerschicht (a) und der Releaseschicht (b) vorliegt, wobei das verwendete Additiv keine Siloxan-Gruppen aufweist und wobei das verwendete Additiv wenigstens zwei funktionelle Gruppen aufweist, von denen wenigstens eine eine zumindest eine Kohlenstoff-Doppelbindung aufweisende funktionelle Gruppe ist.

Unter dem Begriff "biologisch abbaubar" wird im Sinne der vorliegenden Erfindung verstanden, dass ein natürliches, halbsynthetisches oder synthetisches Polymeres in unterschiedlicher Form wie z.B. als eine Schicht einer Trennfolie unter Einwirkung von Mikroorganismen und/oder Enzymen zu Wasser, Kohlendioxid und Biomasse gemäß DIN EN 13432 zersetzbar ist und beim Desintegrationstest im Rahmen der aeroben Kompostierung nach 12 Wochen ein biologischer Abbau zu mindestens 90%, vorzugsweise zu mindestens 95%, besonders bevorzugt zu ≥ 99% erreicht wird.

Die erfindungsgemäße ablösbare Trennfolie weist als biologisch abbaubare Schicht wenigstens eine Trägerschicht (a) und als nicht biologisch abbaubare Komponente wenigstens eine Releaseschicht (b) auf. Da die Trägerschicht (a) im Vergleich zur Releaseschicht (b) die Hauptkomponente der Trennfolie darstellt, ist die erfindungsgemäße Trennfolie insgesamt als überwiegend biologisch abbaubar zu bezeichnen.

"Biologisch abbaubare Polymere" im Sinne der vorliegenden Erfindung sind natürliche, vorzugsweise aus nachwachsenden Rohstoffen hergestellte, halbsynthetische oder synthetische Polymere.

Zur Herstellung der Trägerschicht (a) der erfindungsgemäßen Trennfolie eignet sich wenigstens ein biologisch abbaubares Polymer ausgewählt aus der Gruppe umfassend Milchsäure-Homo- und Copolymere, vorzugsweise Polylactide, besonders bevorzugt DL-Lactid, L-Lactid und D-Lactid, Polyhydroxyalkanoate, Cellulose, Cellulose-Derivate, thermoplastische Stärke, Polyester, vorzugsweise Polycaprolactone, zumindest teilverseifte Polyvinylacetate, Ethylen-Vinylalkohol-Copolymere , Copolymere aus wenigstens zwei Monomeren der genannten Polymere und Mischungen aus wenigstens zwei der genannten Polymere.

Als Polyester zur Herstellung der Trägerschicht (a) geeignet ist wenigstens biologisch abbaubarer Polyester ausgewählt aus der Gruppe Milchsäure-Homo- oder Copolymere, vorzugsweise Polylactide, Polyester aus Lactonen mit 4-10 Kohlenstoffatomen, vorzugsweise Polycaprolactone hergestellt werden. Besonders bevorzugt zum Einsatz kommende biologisch abbaubare Polyester sind Polycaprolactone und/oder Polylactide.

Weiterhin eignen sich zur Herstellung der Trägerschicht (a) zumindest teilverseifte Polyvinylacetate, die durch vollständige oder unvollständige Hydrolyse von entsprechenden Polyvinylacetaten (PVAc) gewonnen werden und sowohl teilverseifte Polyvinylacetate mit einem Verseifungsgrad von 50 bis 98 mol-% als auch vollverseifte Polyvinylacetate, d.h. Polyvinylalkohole (PVOH) mit einem Verseifungsgrad ≥ 98 %, umfassen. Gegebenenfalls können die zumindest teilverseiften Polyvinylacetate in unterschiedlichen Modifizierungen, z.B. in einem amorphen Zustand eingesetzt werden.

Zur Herstellung der Trägerschicht (a) eignen sich auch Ethylen-Vinylalkohol-Copolymere (EVOH), die durch Hydrolyse von entsprechenden Ethylen-Vinylacetat-Copolymeren (EVAc) gewonnen werden und vorzugsweise Ethylen-Vinylalkohol-Copolymere (EVOH) mit einem Verseifungsgrad ≥ 98 % und einem Ethylen-Anteil von 0,01-20 mol-%, vorzugsweise von 0,1-10 mol-%, umfassen.

Die Trägerschicht (a) der erfindungsgemäßen Trennfolie weist vorzugsweise eine Schichtdicke von 2 µm bis 200 µm, besonders bevorzugt von 4 µm bis 150 µm, ganz besonders bevorzugt von 5 µm bis 100 µm, insbesondere von 10 µm bis 80 µm, auf.

In einer bevorzugten Ausführungsform der erfindungsgemäßen Trennfolie wird die Trägerschicht (a) zur Erzeugung von funktionellen Gruppen, vorzugsweise zur Erzeugung von Radikalen, einer Corona-Vorbehandlung unterworfen, vorzugsweise vor dem Aufbringen der Releaseschicht (b) auf die Trägerschicht (a).

Zur Herstellung der Releaseschicht (b) der erfindungsgemäßen Trennfolie eignen sich aushärtbare Polysiloxane.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungeh, trifunktionelle Siloxane (T) mit drei Si-O-Bindungen und tetrafunktionelle Siloxane (Q) mit vier Si-O-Bindungen unterscheiden. Vorzugsweise weist das erfindungsgemäß eingesetzte ausgehärtete Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Vorzugsweise weist das ausgehärtete Polysiloxan der Releaseschicht (b) einen Polymerisationsgrad von ≥ 10, vorzugsweise von wenigstens 40, besonders bevorzugt von wenigstens 100 auf.

Vorzugsweise basiert die Releaseschicht (b) auf wenigstens zwei ausgehärteten Polysiloxanen, welche sich vorzugsweise in ihrem Polymerisationsgrad unterscheiden.

Die Releaseschicht (b) basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte, kationisch vernetzte und durch Feuchtigkeitseinwirkung vernetzte Polysiloxane.

Vorzugsweise basiert die Releaseschicht (b) auf wenigstens einem ausgehärteten Polysiloxan, das zumindest teilweise durch das zugefügte vernetzende Additiv und ggf. durch thermische Aushärtung, durch Aushärtung mit elektromagnetischer Strahlung, vorzugsweise durch UV-Strahlung, oder durch Feuchtigkeitseinwirkung ausgehärtet wurde.

Thermisch ausgehärtete Polysiloxane werden durch thermische Hydrosilylierung von Silan-Funktionen aufweisenden Polysiloxanen mit zumindest einer eine Kohlenstoff-Doppelbindung aufweisenden Verbindung erhalten. Bei den durch elektromagnetische Strahlung ausgehärteten Polysiloxanen ist die die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Sowohl die auszuhärtenden Polysiloxane wie auch die vernetzenden Additive, welche zumindest teilweise eine Aushärtung des Polysiloxans bewirken, können jeweils die miteinander reagierenden funktionellen Gruppen aufweisen.

Dementsprechend kann das Additiv über funktionelle Gruppen ausgewählt aus der Gruppe umfassend zumindest eine Kohlenstoff-Doppelbindung aufweisende funktionelle Gruppen, vorzugsweise Vinyl-Gruppen, Allyl-Gruppen, (Meth)acrylsäure-Gruppen und (Meth)acrylsäurederivat-Gruppen, besonders bevorzugt (Meth)acrylsäureester-Gruppen, Epoxid-Gruppen, Isocyanat-Gruppen, Hydroxyl-Gruppen, Amin-Gruppen, Amid-Gruppen, Carboxyl-Gruppen, Säureanhydrid-Gruppen, Alkoxy-Gruppen, Phosphorsäure-Gruppen, Phosphorsäureester-Gruppen, Silan-Gruppen (Si-H-Gruppen), Alkoxysilan-Gruppen, vorzugsweise Monoalkoxysilan-, Dialkoxysilan- und Trialkoxysilan-Gruppen, durch Vernetzung mit funktionellen Gruppen des Polysiloxans, vorzugsweise durch Vernetzung mit zumindest eine Kohlenstoff-Doppelbindung aufweisenden funktionellen Gruppen des Polysiloxans, besonders bevorzugt mit (Meth)acrylsäurederivat-Gruppen, ganz besonders bevorzugt über (Meth)acrylsäureester-Gruppen des Polysiloxans, das Polysiloxan zumindest teilweise aushärten.

In einer besonders bevorzugten Ausführungsform der erfindungsgemäßen Trennfolie werden daher zur Herstellung der Releaseschicht (b) Polysiloxane eingesetzt, die als funktionelle Gruppen (Meth)acrylsäurederivat-Gruppen, insbesondere (Meth)acrylsäureester-Gruppen aufweisen.

In einer weiteren bevorzugten Ausführungsform der erfindungsgemäßen Trennfolie werden zur Herstellung der Releaseschicht (b) solche Polysiloxane eingesetzt, die bei einer Temperatur von < 100°C, vorzugsweise < 80°C, besonders bevorzugt < 60°C, ganz besonders bevorzugt in einem Bereich von < 60°C bis 20°C, ausgehärtet werden können.

Dem Fachmann ist hierbei klar, dass die zur Vernetzung eingesetzten funktionellen Gruppen des Additivs und des Polysiloxans nach der Vernetzung in einer modifizierten, d.h. umgesetzten und abreagierten Form vorliegen.

Vorzugsweise basiert die Releaseschicht (b) der erfindungsgemäßen Trennfolie auf 0,01 bis 30 Gew.-%, vorzugsweise 0,1 bis 20 Gew.-%, besonders bevorzugt 1 bis 15 Gew.-% des vernetzten Additivs mit Haftvermittlungswirkung.

Das erfindungsgemäß eingesetzte Additiv weist vorzugsweise ein Molekulargewicht von höchstens 5000 g/mol, besonders bevorzugt von höchstens 2500 g/mol, ganz besonders bevorzugt von höchstens 1000 g/mol auf.

Das erfindungsgemäße eingesetzte Additiv weist keine Siloxan-Gruppen, aber wenigstens zwei funktionelle Gruppen auf, von denen wenigstens eine eine zumindest eine Kohlenstoff-Doppelbindung aufweisende funktionelle Gruppe ist.

Vorzugsweise weist das verwendete Additiv wenigstens zwei, vorzugsweise wenigstens drei, vernetzende funktionelle Gruppen auf, von denen wenigstens eine eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, besonders bevorzugt (Meth)acrylsäureester-Gruppen, ist, und die weitere(n) funktionelle(n) Gruppe(n) ausgewählt ist/sind aus der Gruppe umfassend zumindest eine Kohlenstoff-Doppelbindung aufweisende funktionelle Gruppe, vorzugsweise ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, Epoxid-Gruppen, Isocyanat-Gruppen, Hydroxyl-Gruppen, Amin-Gruppen, Amid-Gruppen, Carboxyl-Gruppen, Säureanhydrid-Gruppen, Alkoxy-Gruppen, Phosphorsäure-Gruppen, Phosphorsäureester-Gruppen, Silan-Gruppen, Alkoxysilan-Gruppen, vorzugsweise Monoalkoxysilan-, Dialkoxysilan- und Trialkoxysilan-Gruppen.

Das verwendete Additiv weist besonders bevorzugt wenigstens zwei, vorzugsweise wenigstens drei, funktionelle Gruppen auf, von denen wenigstens eine
eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, ist,
und die weiter(n) funktionelle(n) Gruppe(n)
wenigstens eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, ist/sind
oder wenigstens eine Silan-Gruppe ist/Silan-Gruppen sind,
oder wenigstens eine Alkoxysilan-Gruppe ist/Alkoxysilan-Gruppen sind, vorzugsweise ausgewählt aus der Gruppe umfassend Monoalkoxysilan-, Dialkoxysilan- und Trialkoxysilan-Gruppen,
oder wenigstens eine funktionelle Gruppe(n) ausgewählt ist/sind aus der Gruppe umfassend Epoxid-Gruppen, Isocyanat-Gruppen, Hydroxyl-Gruppen, Amin-Gruppen, Amid-Gruppen, Phosphorsäure-Gruppen, Phosphorsäureester-Gruppen, Carboxyl-Gruppen und Säureanhydrid-Gruppen.

Das verwendete Additiv weist ganz besonders bevorzugt wenigstens zwei, vorzugsweise wenigstens drei, funktionelle Gruppen auf, von denen wenigstens eine eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, ist/sind,
und die weiter(n) funktionelle(n) Gruppe(n)
wenigstens eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, ist/sind
oder wenigstens eine funktionelle Gruppe(n) ausgewählt ist/sind aus der Gruppe umfassend Hydroxyl-Gruppen, Carboxyl-Gruppen und Säureanhydrid-Gruppen.

Das verwendete Additiv kann zumindest zwei unterschiedliche oder zumindest zwei identische vernetzende funktionelle Gruppen aufweisen.

Das verwendete Additiv ist vorzugsweise eine monomere Verbindung.

In einer besonders bevorzugten Ausführungsform der erfindungsgemäßen Trennfolie weist das verwendete Additiv zumindest als eine der wenigstens zwei funktionellen Gruppe eine (Meth)acrylsäurederivat-Gruppe und/oder eine Vinyl-Gruppe auf.

Vorzugsweise ist das Vernetzer- und Haftungsvermittlungs-Additiv ausgewählt aus der Gruppe umfassend di- und tri-funktionelle Säureester, vorzugsweise di- und trifunktionelle (Meth)acrylsäureester, besonders bevorzugt di- und tri-funktionelle Acrylsäureester, Tripropylenglykoldiacrylat, Triacetoxyvinylsilan, (Meth)acryloxymethyltrimethoxysilan und (Meth)acryloxypropylltrimethoxysilan.

Derartige Verbindungen sind teilweise marktgeführte Produkte wie z.B. Produkte der Firmen Sartomer, Wacker oder Siegwerk.

Vorzugsweise weist das erfindungsgemäß zur möglichen Reaktion mit dem biologisch abbaubaren Polymeren der Trägerschicht (a) eingesetzte Additiv nach der Aushärtung des Polysiloxans der Releaseschicht (b) noch wenigstens eine nicht umgesetzte, d.h. nicht abreagierte funktionelle Gruppe ausgewählt aus der Gruppe umfassend zumindest eine Kohlenstoff-Doppelbindung aufweisende funktionelle Gruppe, vorzugsweise Vinyl-Gruppen, Allyl-Gruppen, (Meth)acrylsäure-Gruppen und (Meth)acrylsäurederivat-Gruppen, besonders bevorzugt (Meth)acrylsäureester-Gruppen, Epoxid-Gruppen, Isocyanat-Gruppen, Hydroxyl-Gruppen, Amin-Gruppen, Amid-Gruppen, Carboxyl-Gruppen, Säureanhydrid-Gruppen, Alkoxy-Gruppen, Phosphorsäure-Gruppen, Phosphorsäureester-Gruppen, Silan-Gruppen (Si-H-Gruppen), Alkoxysilan-Gruppen, vorzugsweise Monoalkoxysilan-, Dialkoxysilan- und Trialkoxysilan-Gruppen, auf.

Besonders bevorzugt weist das erfindungsgemäß zur möglichen Reaktion mit dem biologisch abbaubaren Polymeren der Trägerschicht (a) eingesetzte Additiv nach der Aushärtung des Polysiloxans der Releaseschicht (b) noch wenigstens eine nicht umgesetzte, d.h. nicht abreagierte funktionelle Gruppe ausgewählt aus der Gruppe umfassend Hydroxyl-Gruppen, Carboxyl-Gruppen und Säureanhydrid-Gruppen, ganz besonders bevorzugt Carboxyl-Gruppen, auf.

Die Haftungsvermittlung zwischen der Releaseschicht (b) und der Trägerschicht (a) der erfindungsgemäßen Trennfolie beruht auf der Reaktion wenigstens einer der vorstehend genannten funktionellen Gruppen des Additivs mit einer funktionellen Gruppe des biologisch abbaubaren Polymers der Trägerschicht (a), vorzugsweise nach einer Corona-Vorbehandlung der Trägerschicht (a)

Die Releaseschicht (b) der erfindungsgemäßen Trennfolie weist vorzugsweise eine Schichtdicke von ≤ 5 µm, besonders bevorzugt von ≤ 2 µm, ganz besonders bevorzugt von 0,1 µm bis 1,5 µm auf.

Vorzugsweise weist die erfindungsgemäße Trennfolie auf wenigstens einer Oberfläche eine außenliegende Releaseschicht (b) auf.

Die erfindungsgemäße Trennfolie weist zwischen der Trägerschicht (a) und der Releaseschicht (b) keine Haftvermittlerschicht auf, vorzugsweise auch nicht in dem Schichtverbund, der als Trägerschicht (a) vorliegt.

Das Verhältnis der Gesamtschichtdicke der Trägerschicht(en) (a) der Trennfolie zur Gesamtschichtdicke der Releaseschicht(en) (b) liegt vorzugsweise im Bereich von wenigstens 2:1, besonders bevorzugt von wenigstens 3:1, ganz besonders bevorzugt von wenigstens 4:1, insbesondere von wenigstens 6:1.

Vorzugsweise weist die erfindungsgemäße Trennfolie ein Elastizitätsmodul von ≤ 4000 N/m², vorzugsweise von ≤ 3000 N/m², besonders bevorzugt von ≤ 2500 N/m² auf (nach DIN EN ISO 527).

In einer bevorzugten Ausführungsform weist die erfindungsgemäße Trennfolie einen Schichtverbund umfassend die Trägerschicht (a) auf, der biologisch abbaubar ist.

Die Trägerschicht (a) der erfindungsgemäßen Trennfolie basiert nicht auf Papier.

In einer bevorzugten Ausführungsform der erfindungsgemäßen Trennfolie kann der Schichtverbund zusätzlich zur Trägerschicht (a) wenigstens eine Substratschicht (c) basierend auf wenigstens einem biologisch abbaubaren Polymer ausgewählt aus der Gruppe umfassend Cellulose, Cellulose-Derivate, vorzugsweise Papier, besonders bevorzugt Kraftpapier, und thermoplastische Stärke aufweisen.

Die Trägerschicht(en) (a), die Releaseschicht (b) bzw. der entsprechende Schichtverbund mit einer Substratschicht (c) können, wenn notwendig, jeweils unabhängig voneinander mit Zusatzstoffen ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfs-mittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein. Für die biologisch abbaubare(n) Trägerschicht(en) (a) bzw. des entsprechenden biologisch abbaubaren Schichtverbunds mit einer Substratschicht (c) sind diese Zusatzstoffe vorzugsweise biologisch abbaubare Zusatzstoffe. Außerdem muss die Trennwirkung der Releaseschicht (b) erhalten bleiben.

Die Trägerschicht(en) (a), die Releaseschicht (b), ggf. die Substratschicht (c) bzw. ggf. der entsprechende Schichtverbund können jeweils unabhängig voneinander wenigstens 0,01-30 Gew.-%, vorzugsweise wenigstens 0,1-20 Gew.-%, jeweils bezogen auf das Gesamtgewicht einer einzelnen Schicht, wenigstens einen der vorstehend genannten Zusatzstoffe enthalten.

Ein weiterer Gegenstand der vorliegenden Erfindung ist ein Verfahren zur Herstellung der erfindungsgemäßen Trennfolie.

Die Herstellung der Trägerschicht (a) bzw. des entsprechenden Schichtverbundes mit der Substratschicht (c) der erfindungsgemäßen Trennfolie kann nach beliebigen Herstellungsverfahren wie z.B. durch separate Extrusion oder vorzugsweise durch Co-Extrusion erfolgen.

Dabei können sowohl einzelne als auch sämtliche Trägerschichten (a) und ggf. Substratschichten (c), ggf. als Schichtverbund aus wenigstens einer Trägerschicht (a) und wenigstens einer Substratschicht (c) durch Extrusion, vorzugsweise durch Blasfolien-Extrusion und/oder Flachfolien-Extrusion (Cast-Extrusion), oder durch Co-Extrusion, vorzugsweise Blasfolien-Co-Extrusion und/oder Flachfolien-Co-Extrusion (Cast-Co-Extrusion), oder durch thermische Kaschierung oder durch Laminierung, hergestellt werden.

Dabei ist zu beachten, dass im Fall einer Dotierung der Trägerschicht (a) oder ggf. der Substratschicht (c) oder ggf. des Schichtverbundes mit wenigstens einem Zusatzstoff diese durch Abmischen des Zusatzstoffes, ggf. in Form eines Masterbatches, in der oder den Polymer-Komponente(n) der Trägerschicht (a) oder der Substratschicht (c) mit der oder den Polymer-Komponente(n) der Trägerschicht (a) oder der Substratschicht (c) erfolgt. Dieses Abmischen kann in Granulat/Pulver- oder Granulat/Granulat-Form trocken erfolgen. Es ist aber auch möglich, den biologisch abbaubaren Zusatzstoff dem oder den aufgeschmolzenen Polymer-Komponente(n) für die Trägerschicht (a) oder für die Substratschicht (c) zuzugeben, vorzugsweise durch Zudosierung in einem Extruder für die Herstellung der Schichten.

Diese Herstellungsverfahren und entsprechende Parameter sind dem Fachmann allgemein bekannt.

Die Trägerschicht(en) (a) und ggf. die Substratschichten (c) bzw. ein entsprechender Schichtverbund aus wenigstens einer Trägerschicht (a) und wenigstens einer Substratschicht (c) können vorzugsweise durch Blasfolien-(Co)-Extrusion hergestellt werden.

Es ist auch möglich, die genannte erfindungsgemäße Trennfolie durch die vorstehend genannten Extrusionsverfahren, vorzugsweise Co-Extrusionsverfahren, herzustellen.

Die Trägerschicht (a) oder ein Schichtverbund enthaltend wenigstens eine Trägerschicht (a) kann auf einer oder auf beiden Oberflächen, vorzugsweise nur einseitig, mit einer Mischung aus wenigstens einem nicht ausgehärteten Polysiloxan und wenigstens einem vorstehend genannten Additiv, sowie ggf. Zusatzstoffen, beschichtet werden, und diese Mischung durch Einwirkung von Wärme oder von elektromagnetischer Strahlung oder durch Feuchtigkeit, ggf. durch Zusatz wenigstens eines UV-Initiators und/oder eines Radikalstarters in die Mischung, ausgehärtet und mit der Trägerschicht (a) verbunden werden.

Die erfindungsgemäße Trennfolie kann vorzugsweise geprägt und/oder bedruckt werden.

Die erfindungsgemäße Trennfolie wird als biologisch abbaubare, entfernbare Schutzfolie oder Abdeckfolie eingesetzt.

Ein weiterer Gegenstand der vorliegenden Erfindung ist daher die Verwendung der erfindungsgemäßen Trennfolie als entfernbare Schutzfolie, vorzugsweise für Selbstklebeetiketten, Klebebänder, Aufkleber oder Dachbahnen.

Weiterhin kann die erfindungsgemäße Trennfolie auch als entfernbare Schutzfolie für klebefähige Lebensmittel verwendet werden.

Ferner kann die erfindungsgemäße Trennfolie als entfernbare Abdeckfolie für die Verarbeitung von klebefähigen Harzen, Fasern, Gewebe oder anderen Werkstoffen verwendet werden.

Ein weiterer Gegenstand der vorliegenden Erfindung ist die Verwendung der erfindungsgemäßen Trennfolie als entfernbare Schutzfolie für klebefähige, pharmazeutische Produkte, vorzugsweise für Pflaster oder andere klebefähige Wundabdeckungen, oder für klebefähige Sanitär- und Hygiene-Produkte, vorzugsweise für ggf. einzeln verpackte Binden, Einlagen oder Windeln.

### Bestimmung der Trennkraft (Trennwirkung)

Die Trennwirkung der erfindungsgemäßen Trennfolie gegen einen Klebstoff wird durch die Trennkraft in [cN/cm] angegeben, die zum Trennen, d.h. Entfernen der Trennfolie vom Klebstoff erforderlich ist.

Auf eine Probe der erfindungsgemäßen Trennfolie oder einer Vergleichsfolie, für die die Trennkraft ermittelt werden soll, wird hierbei über ihre gesamte Breite blasenfrei ein Testklebeband aufgeklebt. Die Probe wird so zugeschnitten, dass längsseitig vom Testklebeband jeweils ein Rand von 1 cm an Trennfolie verbleibt, der nicht mit dem Testklebeband versehen ist. Die gesamte Breite der Probe beträgt 4,5 cm (1 cm + 2,5 cm + 1 cm). Die Probe wird in mehrere jeweils ca. 30 cm-lange Streifen geschnitten und die Proben-Streifen15 Minuten bei Raumtemperatur gelagert. Anschließend wird die nicht das Testklebeband aufweisende Seite des Probenstreifens mittels eines Doppelklebebands in eine Metallschiene (350 x 40 mm) eines elektronischen Zerreißgeräts eingebracht, die mit einer unteren Spannklemme fixiert wird. Ein steifer, ca. 400 mm langer Folienstreifen wird am Testklebeband des Probenstreifens befestigt und mittels einer oberen Spannklemme im Zerreißgerät fixiert. Das Testklebeband wird nun unter einem Winkel von 180° mit einer Abzugsgeschwindigkeit von 1800 mm/min abgezogen und zur Ermittlung der Trennkraft ein Kraftdiagramm aufgezeichnet. Es wird jeweils ein Mittelwert aus 3 Messungen ermittelt.

### Bestimmung der Haftung der Releaseschicht (b) auf der Trägerschicht (a)

Die Haftung der Releaseschicht (b) auf der Trägerschicht (a) einer Trennfolie wird wie folgt geprüft:
Eine Probe einer Trennfolie umfassend eine Releaseschicht (b) und eine Trägerschicht (a) wird so auf eine glatte Unterlage gelegt, dass die Releaseschicht (b) nach oben zeigt. Mit einem Finger wird vier- bis fünfmal über die Oberfläche der Releaseschicht gerubbelt.

Die Haftung der Releaseschicht (b) auf der Trägerschicht (a) wird wie folgt beurteilt:

| | |
|---|---|
| Prüfung i.O. (Prüfung in Ordnung) | = kein partielles (oder vollständiges) Ablösen der Releaseschicht (b); |
| Rub-Off | = partielles (oder vollständiges) Ablösen der Releaseschicht (b). |

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| PP: | Polypropylen (PP) |
| TPS: | Thermoplastische Stärke (TPS) |
| PLA: | Polylactid (PLA) |
| PCL: | Poly-ε-Caprolacton (PCL) |
| KP: | Kraftpapier |
| POS | Mischung aus |
| | 69,0 Gew.-% α,-ω-modifiziertem Polysiloxanacrylat, |
| | 17,0 Gew.-% seitenständig hochmodifiziertem Polysiloxanacrylat und |
| | 14,0 Gew.-% 1-(4-Dodecylphenyl)-2-hydroxy-2-methylpropan-1-on (Photoinitiator) |
| | |
| System 1: | Mischung aus |
| | 66,2 Gew.-% α,-ω-modifiziertem Polysiloxanacrylat, |
| | 16,3 Gew.-% seitenständig hochmodifiziertem Polysiloxanacrylat, |
| | 13,5 Gew.-% 1-(4-Dodecylphenyl)-2-hydroxy-2-methylpropan-1-on (Photoinitiator) und |
| | 4,0 Gew.% Additiv 1 |
| System 2: | Mischung aus |
| | 68,7 Gew.-% α,-ω-modifiziertem Polysiloxanacrylat, |
| | 16,9 Gew.-% seitenständig hochmodifiziertem Polysiloxanacrylat, |
| | 13,9 Gew.-% 1-(4-Dodecylphenyl)-2-hydroxy-2-methylpropan-1-on (Photoinitiator) und |
| | 0,5 Gew.% Additiv 2 |
| | |
| System 3: | Mischung aus |
| | 60,7 Gew.-% α,-ω-modifiziertem Polysiloxanacrylat, |
| | 15,0 Gew.-% seitenständig hochmodifiziertem Polysiloxanacrylat, |
| | 12,3 Gew.-% 1-(4-Dodecylphenyl)-2-hydroxy-2-methylpropan-1-on (Photoinitiator) und |
| | 12,0 Gew.% Additiv 3 |
| | |
| Additiv 1: | niedermolekulares Triacrylat der Firma Sartomer |
| | |
| Additiv 2: | niedermolekulares Triacetoxyvinylsilan der Firma Wacker |
| | |
| Additiv 3: | niedermolekulares Diacrylat der Firma Siegwerk |

### II. Herstellung der Trennfolien

Die Trennfolien der Vergleichsbeispiele 1-3 **(V1-V3)** sowie der Beispiele 1-9 **(B1-B9)** bestehen jeweils aus zwei Schichten (Trägerschicht (a) und Releaseschicht (b)) und weisen eine Gesamtschichtdicke von jeweils 50 µm auf. Die Trägerschichten (a) wurden jeweils durch Blasfolien- Extrusion hergestellt und in einem nachfolgenden Arbeitsgang mit jeweils einer Releaseschicht (b) beschichtet. Die Trennfolien der Beispiele 10-12 **(B10-B12)** bestehen jeweils aus drei Schichten (Substratschicht (c), Trägerschicht (a) sowie eine Releaseschicht (b)) und weisen eine Gesamtschichtdicke von jeweils 101 µm auf. Die Trägerschichten (a) wurden jeweils durch Blasfolien-Extrusion hergestellt und durch Extrusionsbeschichtung jeweils auf eine Substratschicht (c) aufgebracht. Die Oberfläche der Trägerschicht (a) des so entstandenen Schichtverbundes aus der Trägerschicht (a) und der Substratschicht (c) wurde in einem nachfolgenden Arbeitsgang mit jeweils einer Releaseschicht (b) beschichtet.

Alle Trägerschichten (a) der Beispiele **V1** bis **V3** und **B1** bis **B12** wurden vor der Beschichtung mit der Releaseschicht (b) Corona-vorbehandelt.

### III. Vergleichsbeispiele

Alle nachfolgenden %-Angaben sind jeweils Gew.-%.

### Vergleichsbeispiel 1 (V1):

Trägerschicht (a) (49 µm): 100% PLA
Releaseschicht (b) (1µm): 100% POS

### Vergleichsbeispiel 2 (V2):

Trägerschicht (a) (49 µm): 100% TPS
Releaseschicht (b) (1µm): 100% POS

### Vergleichsbeispiel 3 (V3):

Trägerschicht (a) (49 µm): 100% PCL
Releaseschicht (b) (1µm): 100% POS

### IV. Beispiele

Alle nachfolgenden %-Angaben sind jeweils Gew.-%.

| | |
|---|---|
| *Beispie 1 **(B1):*** | |
| Trägerschicht (a) (49 µm): | 100% PLA |
| Releaseschicht (b) (1 µm): | 100% System 1 |
| | |
| *Beispiel 2 **(B2):*** | |
| Trägerschicht (a) (49 µm): | 100% PLA |
| Releaseschicht (b) (1 µm): | 100% System 2 |
| | |
| *Beispiel 3 **(B3):*** | |
| Trägerschicht (a) (49 µm): | 100% PLA |
| Releaseschicht (b) (1 µm): | 100% System 3 |
| | |
| *Beispiel 4 **(B4):*** | |
| Trägerschicht (a) (49 µm): | 100% TPS |
| Releaseschicht (b) (1 µm): | 100% System 1 |
| | |
| *Beispiel 5 **(B5):*** | |
| Trägerschicht (a) (49 µm): | 100% TPS |
| Releaseschicht (b) (1 µm): | 100% System 2 |
| | |
| *Beispiel 6 **(B6):*** | |
| Trägerschicht (a) (49 µm): | 100% TPS |
| Releaseschicht (b) (1 µm): | 100% System 3 |
| | |
| *Beispiel 7 **(B7):*** | |
| Trägerschicht (a) (49 µm): | 100% PCL |
| Releaseschicht (b) (1 µm): | 100% System 1 |
| *Beispiel 8 **(B8):*** | |
| Trägerschicht (a) (49 µm): | 100% PCL |
| Releaseschicht (b) (1 µm): | 100% System 2 |
| | |
| *Beispiel 9 **(B9):*** | |
| Trägerschicht (a) (49 µm): | 100% PCL |
| Releaseschicht (b) (1 µm): | 100% System 3 |
| | |
| *Beispiel 10 **(B10):*** | |
| Substratschicht (c) (80 µm): | 100% KP |
| Trägerschicht (a) (20 µm): | 100% PLA |
| Releaseschicht (b) (1 µm): | 100% System 1 |
| | |
| *Beispiel 11 **(B11):*** | |
| Substratschicht (c) (80 µm): | 100% KP |
| Trägerschicht (a) (20 µm): | 100% PLA |
| Releaseschicht (b) (1 µm): | 100% System 2 |
| | |
| *Beispiel 12 **(B12):*** | |
| Substratschicht (c) (80 µm): | 100% KP |
| Trägerschicht (a) (20 µm): | 100% PLA |
| Releaseschicht (b) (1 µm): | 100% System 3 |

### V. Bestimmung der Trennkraft/Haftung

Für alle Trennfolien der Beispiele 1-12 **(B1-B12)** sowie der Vergleichsbeispiele 1-3 **(V1-V3)** wurde jeweils nach der vorstehend beschriebenen Methode die Trennkraft ermittelt, die zum Entfernen der Trennfolie von einem Testklebeband (für **V1-V3** und **B1-B12)** erforderlich ist. Ferner wurde nach der vorstehend beschriebenen Methode die Haftung der Releaseschicht (b) auf der Trägerschicht (a) der Trennfolie (für **V1-V3** und **B1-B12)** geprüft.

| Beispiel | Trennkraft (cN/cm) | Haftung der Releaseschicht (b) auf der Trägerschicht (a) |
|---|---|---|
| **V1** | 7,1 | Rub Off |
| **V2** | 8,2 | Rub Off |
| **V3** | 7,2 | Rub Off |
| **B1** | 7,1 | Prüfung i.O. |
| **B2** | 6,6 | Prüfung i.O. |
| **B3** | 7,9 | Prüfung i.O. |
| **B4** | 6,1 | Prüfung i.O. |
| **B5** | 6,2 | Prüfung i.O. |
| **B6** | 7,9 | Prüfung i.O. |
| **B7** | 5,9 | Prüfung i.O. |
| **B8** | 5,5 | Prüfung i.O. |
| **B9** | 6,1 | Prüfung i.O. |
| **B10** | 7,2 | Prüfung i.O. |
| **B11** | 8,1 | Prüfung i.O. |
| **B12** | 8,0 | Prüfung i.O. |

| | | |
|---|---|---|
| Prüfung i.O. = Prüfung in Ordnung (kein Rub-Off) | | |

Die erfindungsgemäßen Trennfolien (Beispiele **B1** bis **B12),** welche eine Releaseschicht (b) basierend auf wenigstens einem mit einem vernetzenden Additiv ausgehärteten Polysiloxan aufweisen, weisen die erforderliche Trennkraft im Bereich von 5 bis 10 cN/cm auf und zeigen zudem im Vergleich zu den Trennfolien der Vergleichsbeispiele **V1-V3** keinen Rub Off.

### VI. Biologische Abbaubarkeit

Die Trägerschichten (a) der erfindungsgemäßen Trennfolien der Beispiele **B1-B12** sind gemäß DIN EN 13432 biologisch abbaubar, d.h. im Rahmen der vorstehenden beschriebenen Methode zur Bestimmung der biologischen Abbaubarkeit und des Desintegrationstests sind die Trägerschichten (a) dieser Trennfolien nach 12 Wochen zu wenigstens 90% abgebaut.

## Patentansprüche

1. Eine zumindest zweischichtige, zu mehr als 50% biologisch abbaubare, entfernbare Schutzfolie oder Abdeckfolie umfassend
(a) wenigstens eine Trägerschicht basierend auf wenigstens einem biologisch abbaubaren Polymeren und
(b) wenigstens eine Releaseschicht basierend auf wenigstens einem ausgehärteten Polysiloxan, dessen Aushärtung zumindest teilweise auf wenigstens einem vernetzenden monomeren oder oligomeren Additiv beruht,
wobei auch die Haftungsvermittlung zwischen der Trägerschicht (a) und der Releaseschicht (b) durch das Additiv bewirkt wird und keine Haftvermittlerschicht zwischen der Trägerschicht (a) und der Releaseschicht (b) vorliegt,
wobei das verwendete Additiv keine Siloxan-Gruppen aufweist und
wobei das verwendete Additiv wenigstens zwei funktionelle Gruppen aufweist, von denen wenigstens eine eine zumindest eine Kohlenstoff-Doppelbindung aufweisende funktionelle Gruppe ist; und
wobei die Trägerschicht (a) nicht auf Papier basiert.

2. Eine entfernbare Schutzfolie oder Abdeckfolie nach Anspruch 1, **dadurch gekennzeichnet, dass** die Trägerschicht (a) auf wenigstens einem biologisch abbaubaren Polymeren ausgewählt aus der Gruppe umfassend Milchsäure-Homo- und Copolymere, vorzugsweise Polylactide, besonders bevorzugt DL-Lactid, L-Lactid und D-Lactid, Polyhydroxyalkanoate, Cellulose, Cellulose-Derivate, thermoplastische Stärke, Polyester, vorzugsweise Polycaprolactone, zumindest teilverseifte Polyvinylacetate, Ethylen-Vinylalkohol-Copolymere, Copolymere aus wenigstens zwei Monomeren der genannten Polymere, und Mischungen aus wenigstens zwei der genannten Polymere, basiert.

3. Eine entfernbare Schutzfolie oder Abdeckfolie nach Anspruch 1 oder 2, **dadurch gekennzeichnet, dass** das ausgehärtete Polysiloxan einen Polymerisationsgrad von ≥10, vorzugsweise von wenigstens 40, besonders bevorzugt von wenigstens 100 aufweist.

4. Eine entfernbare Schutzfolie oder Abdeckfolie nach einem der Ansprüche 1-3, **dadurch gekennzeichnet, dass** als ausgehärtetes Polysiloxan wenigstens ein ausgehärtetes Polysiloxan vorliegt, welches über funktionelle Gruppen des Polysiloxans, vorzugsweise über zumindest eine Kohlenstoff-Doppelbindung aufweisende funktionelle Gruppen des Polysiloxans, besonders bevorzugt über (Meth)acrylsäurederivat-Gruppen, ganz besonders bevorzugt über (Meth)acrylsäureester-Gruppen, zumindest teilweise durch Vernetzung mit wenigstens einer funktionellen Gruppe des Additivs ausgewählt aus der Gruppe umfassend zumindest eine Kohlenstoff-Doppelbindung aufweisende funktionelle Gruppen, vorzugsweise Vinyl-Gruppen, Allyl-Gruppen, (Meth)acrylsäure-Gruppen und (Meth)acrylsäure-derivat-Gruppen, besonders bevorzugt (Meth)acrylsäureester-Gruppen, Epoxid-Gruppen, Isocyanat-Gruppen, Hydroxyl-Gruppen, Amin-Gruppen, Amid-Gruppen, Carboxyl-Gruppen, Säureanhydrid-Gruppen, Alkoxy-Gruppen, Phosphorsäure-Gruppen, Phosphorsäureester-Gruppen, Silan-Gruppen, Alkoxysilan-Gruppen, vorzugsweise Monoalkoxysilan-, Dialkoxysilan- und Trialkoxysilan-Gruppen, ausgehärtet ist.

5. Eine entfernbare Schutzfolie oder Abdeckfolie nach einem der Ansprüche 1-4, **dadurch gekennzeichnet, dass**
als ausgehärtetes Polysiloxan wenigstens zwei ausgehärtete Polysiloxane vorliegen, vorzugsweise wenigstens zwei ausgehärtete Polysiloxane, welche sich in ihrem Polymerisationsgrad unterscheiden.

6. Eine entfernbare Schutzfolie oder Abdeckfolie nach einem der Ansprüche 1-5, **dadurch gekennzeichnet, dass** die Releaseschicht (b) auf 0,01 bis 30 Gew.-%, vorzugsweise 0,1 bis 20 Gew.-%, besonders bevorzugt 1 bis 15 Gew.-% des vernetzten Additivs mit Haftvermittlungswirkung basiert.

7. Eine entfernbare Schutzfolie oder Abdeckfolie nach einem der Ansprüche 1-6, **dadurch gekennzeichnet, dass** das verwendete Additiv ein Molekulargewicht von höchstens 5000 g/mol, vorzugsweise von höchstens 2500 g/mol, besonders bevorzugt von höchstens 1000 g/mol aufweist.

8. Eine entfernbare Schutzfolie oder Abdeckfolie nach einem der Ansprüche 1-7, **dadurch gekennzeichnet, dass** das verwendete Additiv wenigstens zwei, vorzugsweise wenigstens drei, vernetzende funktionelle Gruppen aufweist, von denen wenigstens eine eine zumindest eine Kohlenstoff-Doppelbindung aufweisende funktionelle Gruppe, vorzugsweise eine zumindest eine Kohlenstoff-Doppelbindung aufweisende funktionelle Gruppe ausgewählt aus der Gruppe umfassend Vinyl-Gruppen, Allyl-Gruppen, (Meth)acrylsäure-Gruppen und (Meth)acrylsäurederivat-Gruppen, besonders bevorzugt (Meth)acrylsäureester-Gruppen, ist, und die weitere(n) funktionelle(n) Gruppe(n) ausgewählt ist/sind aus der Gruppe umfassend zumindest eine Kohlenstoff-Doppelbindung aufweisende funktionelle Gruppe, vorzugsweise ausgewählt aus der Gruppe umfassend Vinyl-Gruppen, Allyl-Gruppen, (Meth)acrylsäure-Gruppen und (Meth)acrylsäurederivat-Gruppen, vorzugsweise (Meth)acrylsäureester-Gruppen, Epoxid-Gruppen, Isocyanat-Gruppen, Hydroxyl-Gruppen, Amin-Gruppen, Amid-Gruppen, Carboxyl-Gruppen, Säureanhydrid-Gruppen, Alkoxy-Gruppen, Phosphorsäure-Gruppen, Phosphorsäureester-Gruppen, Silan-Gruppen, Alkoxysilan-Gruppen, vorzugsweise Monoalkoxysilan-, Dialkoxysilan- und Trialkoxysilan-Gruppen.

9. Eine entfernbare Schutzfolie oder Abdeckfolie nach einem der Ansprüche 1-8, **dadurch gekennzeichnet, dass** das verwendete Additiv wenigstens zwei, vorzugsweise wenigstens drei vernetzende funktionelle Gruppen aufweist, wobei wenigstens eine dieser funktionellen Gruppen
eine zumindest eine Kohlenstoff-Doppelbindung aufweisende vernetzende funktionelle Gruppe ausgewählt aus der Gruppe umfassend (Meth)acrylsäure-Gruppen, Vinyl-Gruppen, Allyl-Gruppen und (Meth)acrylsäurederivat-Gruppen, vorzugsweise (Meth)acrylsäureester-Gruppen ist,
und wenigstens eine weitere funktionelle Gruppe
eine zumindest eine Kohlenstoff-Doppelbindung aufweisende vernetzende funktionelle Gruppe ausgewählt aus der Gruppe umfassend (Meth)acrylsäure-Gruppen, Vinyl-Gruppen, Allyl-Gruppen und (Meth)acrylsäurederivat-Gruppen, vorzugsweise (Meth)acrylsäureester-Gruppen ist
oder eine Silan-Gruppe ist,
oder eine Alkoxysilan-Gruppe, vorzugsweise ausgewählt aus der Gruppe umfassend Monoalkoxysilan-, Dialkoxysilan- und Trialkoxysilan-Gruppen, ist oder eine funktionelle Gruppe ausgewählt ist aus der Gruppe umfassend Epoxid-Gruppen, Isocyanat-Gruppen, Hydroxyl-Gruppen, Amin-Gruppen, Amid-Gruppen, Carboxyl-Gruppen und Säureanhydrid-Gruppen.

10. Eine entfernbare Schutzfolie oder Abdeckfolie nach einem der Ansprüche 1-9, **dadurch gekennzeichnet, dass** das verwendete Additiv zumindest zwei unterschiedliche oder zumindest zwei identische vernetzende funktionelle Gruppen aufweist.

11. Eine entfernbare Schutzfolie oder Abdeckfolie nach einem der Ansprüche 1-10, **dadurch gekennzeichnet, dass** die Haftungsvermittlung zwischen der Releaseschicht (b) und der Trägerschicht (a) auf einer Reaktion wenigstens einer funktionellen Gruppe des Additivs mit wenigstens einer funktionellen Gruppe des biologisch abbaubaren Polymers der Trägerschicht (a) beruht, vorzugsweise nach Corona-Vorbehandlung der Trägerschicht (a).

12. Eine entfernbare Schutzfolie oder Abdeckfolie nach einem der Ansprüche 1-11, **dadurch gekennzeichnet, dass** das verwendete Additiv eine monomere Verbindung ist.

13. Eine entfernbare Schutzfolie oder Abdeckfolie nach einem der Ansprüche 1-12, **dadurch gekennzeichnet, dass** die Trennfolie einen Schichtverbund als Trägerschicht (a) aufweist, der biologisch abbaubar ist.

14. Eine entfernbare Schutzfolie oder Abdeckfolie nach einem der Ansprüche 1-13, **dadurch gekennzeichnet, dass** sie an einer ihrer Oberflächen eine Releaseschicht (b) aufweist.

15. Eine entfernbare Schutzfolie oder Abdeckfolie nach einem der Ansprüche 1-14, **dadurch gekennzeichnet,**
**dass** sie wenigstens eine weitere Substratschicht (c) basierend auf wenigstens einem biologisch abbaubaren Polymer ausgewählt aus der Gruppe umfassend Cellulose, Cellulose-Derivate, vorzugsweise Papier, und thermoplastische Stärke aufweist.

16. Ein Verfahren zur Herstellung einer mehrschichtigen Schutzfolie oder Abdeckfolie nach einem der Ansprüche 1-15, **dadurch gekennzeichnet, dass** eine Trägerschicht (a)
oder ein Schichtverbund aus wenigstens einer Trägerschicht (a) und wenigstens einer Substratschicht (c) (co)-extrudiert wird oder durch Laminierung hergestellt wird, die Trägerschicht (a) oder ein Schichtverbund enthaltend wenigstens die Trägerschicht (a) anschließend auf wenigstens einer Oberfläche mit einer Releaseschicht (b) basierend auf einer Mischung aus wenigstens einem nicht ausgehärteten Polysiloxan und wenigstens einem Vernetzer- und Haftungsvermittlungs-Additiv beschichtet wird, und diese Mischung durch Einwirkung von Wärme oder elektromagnetischer Strahlung oder durch Feuchtigkeit, ggf. durch Zusatz wenigstens eines UV-Initiators und/oder eines Radikalstarters, ausgehärtet und mit der Trägerschicht (a) verbunden wird.

17. Eine Verwendung der entfernbaren Schutzfolie nach einem der Ansprüche 1-15 als entfernbare Schutzfolie für Selbstklebeetiketten, Klebebänder, Aufkleber oder Dachbahnen.

18. Eine Verwendung der entfernbaren Schutzfolie nach einem der Ansprüche 1-15 als entfernbare Schutzfolie für klebefähige Lebensmittel.

19. Eine Verwendung der entfernbaren Abdeckfolie nach einem der Ansprüche 1-15 als entfernbare Abdeckfolie für die Verarbeitung von klebefähigen Harzen, Fasern, Gewebe oder anderen Werkstoffen.

20. Eine Verwendung der entfernbaren Schutzfolie nach einem der Ansprüche 1-15 als entfernbare Schutzfolie für klebefähige, pharmazeutische Produkte, vorzugsweise für Pflaster oder andere klebefähige Wundabdeckungen, oder für klebefähige Sanitär- und Hygiene-Produkte, vorzugsweise für ggf. einzeln verpackte Binden, Einlagen oder Windeln.

## Claims

1. An at least two-layer, more than 50% biodegradable releasable protective film or cover film comprising
(a) at least one backing layer based on at least one biodegradable polymer and
(b) at least one release layer based on at least one cured polysiloxane which curing derives at least partly from at least one crosslinking monomeric or oligomeric additive,
said additive also promoting adhesion between the backing layer (a) and the release layer (b), there being no adhesion promoter layer between the backing layer (a) and the release layer (b),
the additive used containing no siloxane groups, and
the additive used containing at least two functional groups of which at least one is a functional group containing at least one carbon double bond; and
the backing layer (a) being not paper-based.

2. A releasable protective film or cover film as claimed in claim 1, **characterized in that** the backing layer (a) is based on at least one biodegradable polymer selected from the group comprising lactic acid homopolymers and copolymers, preferably polylactides, more preferably DL-lactide, L-lactide, and D-lactide, polyhydroxyalkanoates, cellulose, cellulose derivatives, thermoplastic starch, polyester, preferably polycaprolactones, at least partly hydrolyzed polyvinyl acetates, ethylene-vinyl alcohol copolymers, copolymers of at least two monomoners of the stated polymers, and mixtures of at least two of the stated polymers.

3. A releasable protective film or cover film as claimed in claim 1 or 2, **characterized in that** the cured polysiloxane has a degree of polymerization of ≥ 10, preferably of at least 40, more preferably of at least 100.

4. A releasable protective film or cover film as claimed in any of claims 1-3, **characterized in that** said cured polysiloxane comprises at least one cured polysiloxane which is cured via functional groups of the polysiloxane, preferably via functional groups of the polysiloxane that contain at least one carbon double bond, more preferably via (meth)acrylic acid derivative groups, very preferably via (meth)acrylic ester groups, at least partly by crosslinking with at least one functional group of the additive that is selected from the group comprising functional groups containing at least one carbon double bond, preferably vinyl groups, allyl groups, (meth)acrylic acid groups, and (meth)acrylic acid derivative groups, more preferably (meth)acrylic ester groups, epoxide groups, isocyanate groups, hydroxyl groups, amine groups, amide groups, carboxyl groups, acid anhydride groups, alkoxy groups, phosphoric acid groups, phosphoric ester groups, silane groups, alkoxysilane groups, preferably monoalkoxysilane, dialkoxysilane, and trialkoxysilane groups.

5. A releasable protective film or cover film as claimed in any of claims 1-4, **characterized in that** said cured polysiloxane comprises at least two cured polysiloxanes, preferably at least two cured polysiloxanes which differ in their degree of polymerization.

6. A releasable protective film or cover film as claimed in any of claims 1-5, **characterized in that** the release layer (b) is based on 0.01% to 30% by weight, preferably 0.1% to 20% by weight, more preferably 1% to 15% by weight of the crosslinked additive with adhesion promotion.

7. A releasable protective film or cover film as claimed in any of claims 1-6, **characterized in that** the additive used has a molecular weight of not more than 5000 g/mol, preferably of not more than 2500 g/mol, more preferably of not more than 1000 g/mol.

8. A releasable protective film or cover film as claimed in any of claims 1-7, **characterized in that** the additive used has at least two, preferably at least three, crosslinking functional groups of which at least one is a functional group containing at least one carbon double bond, preferably a functional group containing at least one carbon double bond selected from the group comprising vinyl groups, allyl groups, (meth)acrylic acid groups, and (meth)acrylic acid derivative groups, more preferably (meth)acrylic ester groups, and the further functional group or groups is or are selected from the group comprising functional group containing at least one carbon double bond, preferably selected from the group comprising vinyl groups, allyl groups, (meth)acrylic acid groups and (meth)acrylic acid derivative groups, preferably (meth)acrylic ester groups, epoxide groups, isocyanate groups, hydroxyl groups, amine groups, amide groups, carboxyl groups, acid anhydride groups, alkoxy groups, phosphoric acid groups, phosphoric ester groups, silane groups, alkoxysilane groups, preferably monoalkoxysilane, dialkoxysilane and trialkoxysilane groups.

9. A releasable protective film or cover film as claimed in any of claims 1-8, **characterized in that** the additive used has at least two, preferably at least three, crosslinking functional groups, and at least one of these functional groups
is a crosslinking functional group containing at least one carbon double bond and is selected from the group comprising (meth)acrylic acid groups, vinyl groups, allyl groups, and (meth)acrylic acid derivative groups, preferably (meth)acrylic ester groups,
and at least one further functional group
is a crosslinking functional group containing at least one carbon double bond and is selected from the group comprising (meth)acrylic acid groups, vinyl groups, allyl groups, and (meth)acrylic acid derivative groups, preferably (meth)acrylic ester groups
or is a silane group,
or is an alkoxysilane group, preferably selected from the group comprising monoalkoxysilane, dialkoxysilane and trialkoxysilane groups,
or is a functional group selected from the group comprising epoxide groups, isocyanate groups, hydroxyl groups, amine groups, amide groups, carboxyl groups, and acid anhydride groups.

10. A releasable protective film or cover film as claimed in any of claims 1-9, **characterized in that** the additive used has at least two different or at least two identical crosslinking functional groups.

11. A releasable protective film or cover film as claimed in any of claims 1-10, **characterized in that** the adhesion between the release layer (b) and the backing layer (a) is promoted by reaction of at least one functional group of the additive with at least one functional group of the biodegradable polymer of the backing layer (a), preferably after corona pretreatment of the backing layer (a).

12. A releasable protective film or cover film as claimed in any of claims 1-11, **characterized in that** the additive used is a monomeric compound.

13. A releasable protective film or cover film as claimed in any of claims 1-12, **characterized in that** the release film has a laminate as backing layer (a) that is biodegradable.

14. A releasable protective film or cover film as claimed in any of claims 1-13, **characterized in that** it has a release layer (b) on one of its surfaces.

15. A releasable protective film or cover film as claimed in any of claims 1-14, **characterized in that** it has at least one further substrate layer (c) based on at least one biodegradable polymer selected from the group comprising cellulose, cellulose derivatives, preferably paper, and thermoplastic starch.

16. A method for producing a multilayer releasable protective film or cover film as claimed in any of claims 1-15, **characterized in that** a backing layer (a) or a laminate of at least one backing layer (a) and at least one substrate layer (c) is (co)extruded or is produced by lamination, the backing layer (a) or a laminate comprising at least the backing layer (a) is subsequently coated on at least one surface with a release layer (b) based on a mixture of at least one uncured polysiloxane and at least one crosslinking and adhesion promoting additive, and this mixture is cured and bonded to the backing layer (a) by exposure to heat or electromagnetic radiation or by moisture, optionally by addition of at least one UV initiator and/or free-radical initiator.

17. A use of the releasable protective film as claimed in any of claims 1-15 as a removable protective film for self-adhesive labels, adhesive tapes, stickers or roofing membranes.

18. A use of the releasable protective film as claimed in any of claims 1-15 as a removable protective film for adhesive foods.

19. A use of the releasable cover film as claimed in any of claims 1-15 as a removable cover film for the processing of adhesive resins, fibers, fabrics or other materials.

20. A use of the releasable protective film as claimed in any of claims 1-15 as a removable protective film for adhesive pharmaceutical products, preferably for plasters or other adhesive wound coverings, or for adhesive sanitary and hygiene products, preferably for optionally individually packaged sanitary napkins, liners or diapers.

## Revendications

1. Film de protection ou film de recouvrement au moins à deux couches, biodégradable à raison de plus de 50%, amovible, comprenant
(a) au moins une couche support à base d'au moins un polymère biodégradable et
(b) au moins une couche antiadhésive à base d'au moins un polysiloxane durci, dont le durcissement repose au moins partiellement sur au moins un additif monomère réticulant ou un additif oligomère réticulant,
l'effet de promotion d'adhérence entre la couche support (a) et la couche antiadhésive (b) étant également provoqué par l'additif et aucune couche de promoteur d'adhérence ne se trouvant entre la couche support (a) et la couche antiadhésive (b),
l'additif utilisé ne présentant pas de groupes siloxane et
l'additif utilisé présentant au moins deux groupes fonctionnels, dont au moins un est un groupe fonctionnel présentant au moins une double liaison carbonée ; et
la couche support (a) n'étant pas à base de papier.

2. Film de protection ou film de recouvrement amovible selon la revendication 1, **caractérisé en ce que** la couche support (a) est à base d'au moins un polymère biodégradable, choisi dans le groupe comprenant les homopolymères et les copolymères de l'acide lactique, de préférence les polylactides, de manière particulièrement préférée le DL-lactide, le L-lactide et le D-lactide, les polyhydroxyalcanoates, la cellulose, les dérivés de cellulose, les amidons thermoplastiques, les polyesters, de préférence les polycaprolactones, les poly(acétates de vinyle) au moins partiellement saponifiés, les copolymères d'éthylène-alcool vinylique, les copolymères d'au moins deux monomères des polymères mentionnés et les mélanges d'au moins deux des polymères mentionnés.

3. Film de protection ou film de recouvrement amovible selon la revendication 1 ou 2, **caractérisé en ce que** le polysiloxane durci présente un degré de polymérisation ≥ 10, de préférence d'au moins 40, de manière particulièrement préférée d'au moins 100.

4. Film de protection ou film de recouvrement amovible selon l'une quelconque des revendications 1 à 3, **caractérisé en ce qu'**il s'agit, pour le polysiloxane durci qui est présent, d'au moins un polysiloxane durci, qui est au moins partiellement durci, via des groupes fonctionnels du polysiloxane, de préférence via des groupes fonctionnels présentant au moins une double liaison carbonée du polysiloxane, de manière particulièrement préférée via des groupes dérivés de l'acide (méth)acrylique, de manière tout particulièrement préférée via des groupes ester de l'acide (méth)acrylique, par réticulation avec au moins un groupe fonctionnel de l'additif, choisi dans le groupe comprenant les groupes fonctionnels présentant au moins une double liaison carbonée, de préférence les groupes vinyle, les groupes allyle, les groupes acide (méth)acrylique et les groupes dérivés de l'acide (méth)acrylique, de manière particulièrement préférée les groupes ester de l'acide (méth)acrylique, les groupes époxyde, les groupes isocyanate, les groupes hydroxyle, les groupes amine, les groupes amide, les groupes carboxyle, les groupes anhydride d'acide, les groupes alcoxy, les groupes acide phosphorique, les groupes ester de l'acide phosphorique, les groupes silane, les groupes alcoxysilane, de préférence les groupes monoalcoxysilane, dialcoxysilane et trialcoxysilane.

5. Film de protection ou film de recouvrement amovible selon l'une quelconque des revendications 1 à 4, **caractérisé en ce qu'**il s'agit, pour le polysiloxane durci qui est présent, d'au moins deux polysiloxanes durcis, de préférence d'au moins deux polysiloxanes durcis qui se distinguent par leur degré de polymérisation.

6. Film de protection ou film de recouvrement amovible selon l'une quelconque des revendications 1 à 5, **caractérisé en ce que** la couche antiadhésive (b) est à base de 0,01 à 30% en poids, de préférence de 0,1 à 20% en poids, de manière particulièrement préférée de 1 à 15% en poids de l'additif réticulé présentant un effet promoteur d'adhérence.

7. Film de protection ou film de recouvrement amovible selon l'une quelconque des revendications 1 à 6, **caractérisé en ce que** l'additif utilisé présente un poids moléculaire d'au plus 5000 g/mole, de préférence d'au plus 2500 g/mole, de manière particulièrement préférée d'au plus 1000 g/mole.

8. Film de protection ou film de recouvrement amovible selon l'une quelconque des revendications 1 à 7, **caractérisé en ce que** l'additif utilisé présente au moins deux, de préférence au moins trois groupes fonctionnels réticulants, dont au moins un est un groupe fonctionnel présentant au moins une double liaison carbonée, de préférence un groupe fonctionnel présentant au moins une double liaison carbonée choisi dans le groupe comprenant les groupes vinyle, les groupes allyle, les groupes acide (méth)acrylique et les groupes dérivés de l'acide (méth)acrylique, de manière particulièrement préférée les groupes ester de l'acide (méth)acrylique, et le(s) autre(s) groupe(s) fonctionnel(s) est/sont choisi(s) dans le groupe comprenant les groupes fonctionnels présentant au moins une double liaison carbonée, de préférence choisi(s) dans le groupe comprenant les groupes vinyle, les groupes allyle, les groupes acide (méth)acrylique et les groupes dérivés de l'acide (méth)acrylique, de préférence les groupes ester de l'acide (méth)acrylique, les groupes époxyde, les groupes isocyanate, les groupes hydroxyle, les groupes amine, les groupes amide, les groupes carboxyle, les groupes anhydride d'acide, les groupes alcoxy, les groupes acide phosphorique, les groupes ester de l'acide phosphorique, les groupes silane, les groupes alcoxysilane, de préférence les groupes monoalcoxysilane, dialcoxysilane et trialcoxysilane.

9. Film de protection ou film de recouvrement amovible selon l'une quelconque des revendications 1 à 8, **caractérisé en ce que** l'additif utilisé présente au moins deux, de préférence au moins trois groupes fonctionnels réticulants, au moins un de ces groupes fonctionnels
étant un groupe fonctionnel réticulant présentant au moins une double liaison carbonée, choisi dans le groupe comprenant les groupes acide (méth)acrylique, les groupes vinyle, les groupes allyle et les groupes dérivés de l'acide (méth)acrylique, de préférence les groupes ester de l'acide (méth)acrylique,
et au moins un autre groupe fonctionnel
étant un groupe fonctionnel réticulant présentant au moins une double liaison carbonée, choisi dans le groupe comprenant les groupes acide (méth)acrylique, les groupes vinyle, les groupes allyle et les groupes dérivés de l'acide (méth)acrylique, de préférence les groupes ester de l'acide (méth)acrylique,
ou un groupe silane,
ou un groupe alcoxysilane, de préférence choisi dans le groupe comprenant les groupes monoalcoxysilane, dialcoxysilane et trialcoxysilane,
ou un groupe fonctionnel choisi dans le groupe comprenant les groupes époxyde, les groupes isocyanate, les groupes hydroxyle, les groupes amine, les groupes amide, les groupes carboxyle et les groupes anhydride d'acide.

10. Film de protection ou film de recouvrement amovible selon l'une quelconque des revendications 1 à 9, **caractérisé en ce que** l'additif utilisé présente au moins deux groupes fonctionnels réticulants différents ou au moins deux groupes fonctionnels réticulants identiques.

11. Film de protection ou film de recouvrement amovible selon l'une quelconque des revendications 1 à 10, **caractérisé en ce que** l'effet promoteur d'adhérence entre la couche antiadhésive (b) et la couche support (a) repose sur une réaction d'au moins un groupe fonctionnel de l'additif avec au moins un groupe fonctionnel du polymère biodégradable de la couche support (a), de préférence après un prétraitement de type corona de la couche support (a).

12. Film de protection ou film de recouvrement amovible selon l'une quelconque des revendications 1 à 11, **caractérisé en ce que** l'additif utilisé est un composé monomère.

13. Film de protection ou film de recouvrement amovible selon l'une quelconque des revendications 1 à 12, **caractérisé en ce que** le film de séparation présente, comme couche support (a), un composite à couches qui est biodégradable.

14. Film de protection ou film de recouvrement amovible selon l'une quelconque des revendications 1 à 13, **caractérisé en ce qu'**il présente une couche antiadhésive (b) sur une de ses surfaces.

15. Film de protection ou film de recouvrement amovible selon l'une quelconque des revendications 1 à 14, **caractérisé en ce qu'**il présente au moins une autre couche de substrat (c) à base d'au moins un polymère biodégradable choisi dans le groupe comprenant la cellulose, les dérivés de cellulose, de préférence le papier, et les amidons thermoplastiques.

16. Procédé pour la fabrication d'un film de protection ou d'un film de recouvrement multicouche selon l'une quelconque des revendications 1 à 15, **caractérisé en ce qu'**une couche support (a) ou un composite à couches, constitué d'au moins une couche support (a) et d'au moins une couche de substrat (c), est (co)-extrudé(e) ou produit(e) par laminage, la couche support (a) ou un composite à couches contenant au moins la couche support (a) est ensuite revêtu(e), sur au moins une surface, d'une couche antiadhésive (b) à base d'un mélange d'au moins un polysiloxane non durci et d'au moins un additif réticulant et promoteur d'adhérence et ce mélange est durci sous l'effet de chaleur ou d'un rayonnement électromagnétique ou par l'humidité, le cas échéant par addition d'au moins un initiateur UV et/ou d'un initiateur radicalaire et assemblé avec la couche support (a).

17. Utilisation du film de protection amovible selon l'une quelconque des revendications 1 à 15 comme film de protection amovible pour des étiquettes autoadhésives, des bandes adhésives, des autocollants ou des bandes de toiture.

18. Utilisation du film de protection amovible selon l'une quelconque des revendications 1 à 15 comme film de protection amovible pour des aliments collants.

19. Utilisation du film de recouvrement amovible selon l'une quelconque des revendications 1 à 15 comme film de recouvrement amovible pour la transformation de résines, de fibres, de tissus ou d'autres matériaux collant(e)s.

20. Utilisation du film de protection amovible selon l'une quelconque des revendications 1 à 15 comme film de protection amovible pour des produits adhésifs pharmaceutiques, de préférence pour des sparadraps ou d'autres recouvrements adhésifs de plaies, ou pour des produits sanitaires ou hygiéniques adhésifs, de préférence pour des serviettes hygiéniques, des protège-slips ou des couches emballé(e)s individuellement.
